# EUROPÄISCHE PATENTSCHRIFT

(11) **EP 0 642 941 B1**
(45) Veröffentlichungstag und Bekanntmachung des Hinweises auf die Patenterteilung: **04.02.1998**
(21) Anmeldenummer: 94113975.0
(22) Anmeldetag: 06.09.1994
(51) Int. Cl.: B60J 7/02

(54) **Rahmen eines öffnungsfähigen Fahrzeugdaches**
Frame for a openable vehicle roof
Cadre pour un toit ouvrant de véhicule

(30) Priorität: 09.09.1993 DE 4330582
(43) Veröffentlichungstag der Anmeldung: 15.03.1995
(73) Patentinhaber: WEBASTO KAROSSERIESYSTEME GmbH, D-82131 Stockdorf (DE)
(72) Erfinder: Färber, Manfred, D-82407 Wielenbach (DE)
(74) Vertreter: Wiese, Gerhard

(56) Entgegenhaltungen:
- DE-C- 4 014 487
- DE-U- 9 212 475

## Beschreibung

Die Erfindung betrifft einen Rahmen eines öffnungsfähigen Fahrzeugdaches mit zwei seitlich einer Dachöffnung verlaufenden Rahmenteilen, welche Kanäle zur Ableitung eindringenden Wassers aufweisen, die durch je ein am hinteren Ende des Rahmenteils angeordnetes Endstück begrenzt werden, an welchem ein Anschlußstück zur Befestigung eines Wasserablaufschlauches vorgesehen ist.

Ein Rahmen mit einem derartigen Endstück ist aus der DE 42 14 277 A1 bekannt. Bei der dort gezeigten Anordnung überlappen sich das Endstück und der hintere Bereich des Rahmenteils und werden unter Zwischenfügung einer Dichtung miteinander vernietet. Aus der DE 40 14 487 C1 ist ein Rahmen für ein Fahrzeugschiebedach bekannt, an dessen Seitenteilen in den Endbereichen Endstücke mit einem Wasserablauf durch Kleben, Nieten oder eine Tox-Verbindung verbunden sind. Die genannten Verbindungsarten sind für eine Großserienfertigung aufwendig und teuer.

Aus der DE-U-9 112 475.5 ist ein Rahmen eines öffnungsfähigen Fahrzeugdachs mit Eckverbindungsstücken und Rahmenseitenteilen bekannt, wobei die Eckverbindungsstücke und die Rahmenseitenteile durch Schnappverbindungen miteinander verbunden sind. Insbesondere weisen die Eckverbindungsstücke Vorsprünge auf, die in entsprechende Aufnahmeöffnungen der Rahmenseitenteile einsetzbar sind und Schnappelemente in Form von Erhöhungen haben, die in Schnappeingriff mit Vertiefungen in den Aufnahmeöffnungen gelangen, wenn die Eckverbindungsstücke und Rahmenseitenteile miteinander verbunden werden.

Der Erfindung liegt die Aufgabe zugrunde, einen Rahmen eines öffnungsfähigen Fahrzeugdaches so auszubilden, daß an dessen seitlichen Rahmenteilen Wasser abführende Endstücke einfach und dicht befestigbar sind. Darüber hinaus soll die Verbindung so stabil sein, daß sie bei einer Handhabung des Rahmens beim Transport oder der Montage nicht zu einem teilweisen oder gar vollständigen Wegbrechen des Endstücks führt.

Diese Aufgabe wird gemäß der Erfindung dadurch gelöst, daß das Endstück am Rahmenteil mittels sowohl einer lösbaren Clipsverbindung wie einer Rippenverbindung befestigt ist. Die Stabilität der Verbindung des Rahmenteils mit dem Endstück wird dabei dadurch gewährleistet, daß die beiden Teile durch wenigstens eine in eine nutartige Rille einschiebbare Rippe verbunden sind. Eine derartige Verbindung überträgt weitestgehend die auf das Endstück während der Montage ausgeübten Kräfte und Momente. Die Clipsverbindung hat so nunmehr nur die Aufgabe die beiden Teile unverlierbar zusammenzuhalten.

Vorteilhafte Ausgestaltungen der Erfindung sind den Unteransprüchen entnehmbar.

Besonders vorteilhaft ist eine Anordnung, bei der die Clipsverbindung und die Rille/Rippenverbindung in Fügerichtung so angeordnet sind, daß die Clipsverbindung erst nach dem vollständigen Einschieben der Rippe in die Rille einrasten kann. Hierdurch wird gewährleistet, daß in jedem Falle bei der Montage beider Teile eine sichere und dichte Verbindung hergestellt wird.

Für die Wasserführung ist es vorteilhaft, wenn das Endstück nach oben eine Abdeckung aufweist. Eine solche Abdeckung verhindert wirkungsvoll, daß bei Beschleunigungsvorgängen in den Endbereichen angesammeltes Wasser aus den wasserführenden Kanälen über deren Seitenwände überschwappt und ins Fahrzeuginnere eindringt. Für die Wasserführung ist es ferner vorteilhaft, wenn das Endstück schräge, zum Anschlußstück hin zusammenlaufende Seitenwände aufweist. Durch die sich derart im Endstück verengenden Wasserleitkanäle wird das Wasser sicher in das Anschlußstück und die an dieses angeschlossenen Schläuche eingeleitet und es bleiben keine Nischen oder Taschen am Endstück, in denen sich Wasser sammeln kann und einen modrigen Geruch annimmt oder zur Bildung von Schimmelpilzen führt.

Zur Sicherung der Anschlußstücke ist es vorteilhaft, wenn das Endstück mit einem steifen Abschlußteil nach hinten über dasselbe hinausragt. Ein solches vorzugsweise mit Längsrippen versehenes Abschlußteil ermöglicht ein Abstellen des Schiebedachrahmens auf den hinteren Enden der Endstücke, ohne daß die Gefahr der Beschädigung der Anschlußstücke besteht. Um das Anschlußstück auch vor einer Beschädigung durch seitliche Einwirkung zu schützen, ist es vorteilhaft, daß das Endstück ferner einen seitlich nach außen über das Anschlußstück hinausragenden Teil aufweist.

Zur Förderung der Dichtheit ist es vorteilhaft, daß sich zwischen Hinterkante des Rahmenteils und einer dieser zugewandten Anlauffläche am Endstück eine Dichtung befindet. Diese Dichtung kann in einer vorteilhaften Ausführungsform fest am Endstück angeordnet sein. Bei einem als Kunststoffspritzteil hergestellten Endstück läßt sich eine solche Dichtung vorteilhaft in einem zweiten Arbeitsgang nach Erstellung des Endstückes im 2-Komponenten-Spritzverfahren unmittelbar an dieses anformen.

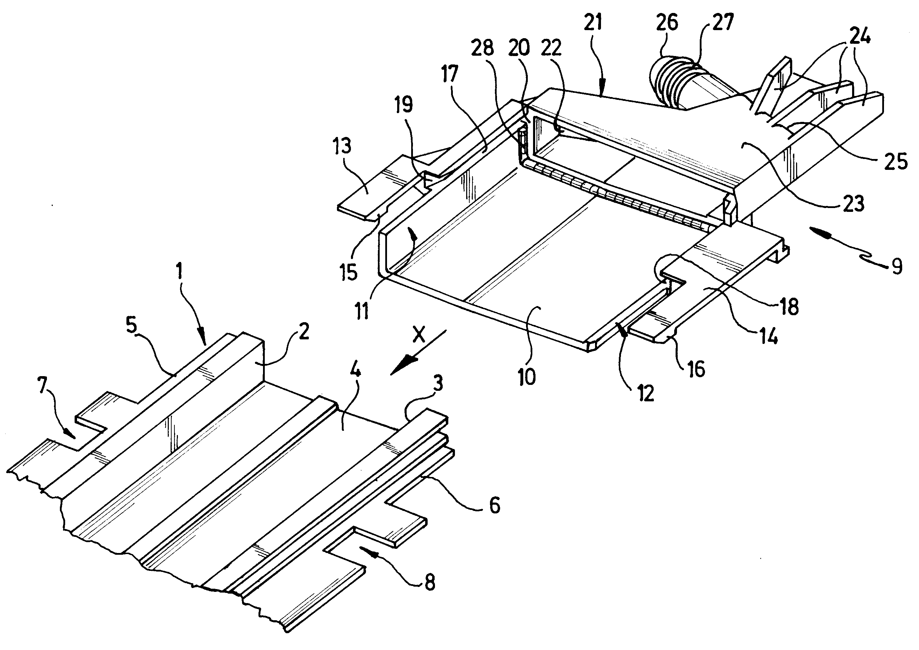

Nachfolgend ist ein Ausführungsbeispiel der Erfindung anhand der einzigen Figur beschrieben.

Diese zeigt eine schematische perspektivische Ansicht des hinteren rechten Bereiches eines Schiebedachrahmens mit einem noch nicht angefügten Endstück. Ein mit 1 bezeichnetes seitliches Rahmenteil weist einen durch Seitenwände 2 bzw. 3 begrenzten Wasserkanal 4 auf. Von den Seitenwänden 2 bzw. 3 erstreckt sich jeweils nach außen eine horizontal verlaufende Rippe 5 bzw. 6 welche in einem Abstand vom hinteren Ende des Rahmenteils 1 einen weiter nach außen vorspringenden Teil mit einer vertikalen Aussparung 7 bzw. 8 aufweisen.

Ein insgesamt mit 9 bezeichnetes Endstück weist ein trogartiges Bodenteil 10 auf, welches seitlich durch Seitenwände 11 bzw. 12 begrenzt wird. Das Endstück weist mit dem trogartigen Bodenteil 10 und den Seitenwänden 11 bzw. 12 einen Querschnitt auf, der geeignet ist, den Endbereich des Rahmenteils 1 von unten und von den Seiten her mit geringem Spiel zu umgreifen. Am Endstück 9 sind ferner zu beiden Seiten oberhalb der Seitenwände 11 bzw. 12 zwei sich horizontal erstreckende Zungen 13 bzw. 14 angeformt. An der Unterseite des freien Endes dieser Zungen 13 bzw. 14 befindet sich ein in vertikaler Richtung nach unten vorspringender Rasthaken 15 bzw. 16. Die Rasthaken 15 bzw. 16 sind von ihren Abmessungen her so ausgelegt, daß sie in die Aussparungen 7 bzw. 8 am Rahmenteil 1 eingreifen können. Zwischen der Oberkante der Seitenwände 11 bzw. 12 und den federnden Zungen 13 bzw. 14 erstreckt sich nach hinten hin im Endstück 9 jeweils eine horizontal verlaufende nutartige Rille 17 bzw. 18. Die Rillen 17 bzw. 18 verlaufen in gleicher Höhe wie die Oberkanten der Seitenwände 11 bzw. 12 und sind in ihrem der Hinterkante des Rahmenteils 1 zugewandten Bereich durch Anlaufschrägen 19 erweitert. Der trogartige Bodenteil 10 und die Seitenwände 11 bzw. 12 des Endstücks 9 werden am hinteren Ende der Rillen 17 bzw. 18 durch nach innen vorspringende Anlaufflächen 20 begrenzt. An diese Anlaufflächen 20 schließt sich nach hinten ein trichterförmiges Abschlußteil 21 an. Das Abschlußteil 21 weist an seiner Außenseite eine schräg nach innen verlaufende Seitenwand 22 auf. Nach oben ist das Abschlußteil 21 durch eine Abdeckung 23 vollständig abgedeckt. Das äußerste hintere Ende des Abschlußteiles ist durch mehrere vertikale längsverlaufende Rippen 24 versteift, um ein Absetzen des komplett montierten Rahmens auf seine hinteren Enden ohne Beschädigung des Endstückes 9 zu ermöglichen. In diesem Bereich weist das trichterförmige Abschlußteil 21 auch an seiner Innenseite eine schräg nach innen verlaufende Seitenwand 25 auf. Die schrägen Seitenwände 22 bzw. 25 des Abschlußteils 21 dienen zur Ableitung des eingedrungenen, im Wasserkanal 4 gesammelten Regenwassers über ein am Endstück 9 im Bereich des Abschlußteiles 21 angeformtes Anschlußstück 26, welches zur Verbindung mit einem nicht dargestellten Wasserablaufschlauch an seinem Außenumfang mit mehreren umlaufenden sägezahnförmigen Rillen 27 versehen ist.

Beim Zusammenfügen des Endstücks 9 mit dem seitlichen Rahmenteil 1 wird das Endstück 9 in Richtung des Pfeiles X so auf das Rahmenteil 1 zubewegt, daß die seitlichen Rippen 5 und 6 über die Anlaufschrägen 19 in die Rillen 17 bzw. 18 eingeführt werden. Hierbei verformen sich die Zungen 13 bzw. 14 geringfügig nach oben und gleiten oberhalb der Rippen 5 bzw. 6 soweit nach vorne, bis die Hinterkante des Rahmenteils 1 an den Anlaufflächen 20 anstößt und zum selben Zeitpunkt die Rasthaken 15 bzw. 16 nach unten in die Aussparungen 7 bzw. 8 eingreifen. Dabei ist der Bereich der Anlaufflächen 20 mit einem Dichtmaterial 28 versehen, welches vorzugsweise im 2-Komponenten-Spritzverfahren unmittelbar bei Herstellung des Endstücks 9 in einem zweiten Arbeitsgang als weiche Kunststoffmasse direkt mit angeschäumt ist. Alternativ dazu lassen sich jedoch auch andere Dichtungen beispielsweise durch Aufbringen einer pastösen Dichtmasse oder Einlegen eines Dichtungsformteiles realisieren.

Mittels der vorstehend beschriebenen Clipsverbindung läßt sich ein mit einer Wasserabführung versehenes Endstück 9 einfach und sicher an einem seitlichen Rahmenteil 1 befestigen. Die Befestigung ist ferner so stabil, daß das Endstück nach der Montage auch bei einem Abstellen des kompletten Rahmens auf dessen Hinterkanten nicht beschädigt werden kann. Das Endstück ist ferner durch die obere Abdeckung und die seitlichen schräg verlaufenden Wände optimal für eine Wasserableitung geformt. Abweichend von der dargestellten Ausführungsform lassen sich die Clipsverbindungen auch über von außen in die Seitenwände des Rahmenteils eingreifende Rasthaken realisieren. Auch die Rippen/Rillenverbindung muß nicht den in der Ausführungsform dargestellten horizontalen Verlauf haben, sondern kann auch vertikal gestaltet sein. Hier sind für den Fachmann zahlreiche Modifikationen denkbar, ohne den erfindungswesentlichen Gedanken zu verlassen.

## Patentansprüche

1. Rahmen eines öffnungsfähigen Fahrzeugdaches mit zwei seitlich einer Dachöffnung verlaufenden Rahmenteilen (1), welche Kanäle (4) zur Ableitung eindringenden Wassers aufweisen, die durch je ein am hinteren Ende des Rahmenteils (1) angeordnetes Endstück (9) begrenzt werden, an welchem ein Anschlußstück (26) zur Befestigung eines Wasserablaufschlauches vorgesehen ist, dadurch gekennzeichnet, daß das Endstück (9) am Rahmenteil (1) mittels einer lösbaren Clipsverbindung (15, 16; 7, 8) und einer Rippenverbindung (17, 18; 5, 6) befestigt ist, die wenigstens eine in eine nutartige Rille (17, 18) einschiebbare Rippe (5, 6) aufweist.

2. Rahmen nach Anspruch 1, dadurch gekennzeichnet, daß die Rille (17, 18) eine Anlaufschräge (19) aufweist, über welche die Rippe (5, 6) in die Rille (17, 18) einführbar ist.

3. Rahmen nach Anspruch 1 oder 2, dadurch gekennzeichnet, daß die Clipsverbindung aus einer federnd angeordneten, mit einem Rasthaken (15, 16) versehenen Zunge (13, 14) und einer am Gegenstück (1) vorgesehenen komplementär zum Rasthaken (15, 16) geformten Aussparung (7, 8) gebildet ist.

4. Rahmen nach Anspruch 3, dadurch gekennzeichnet, daß die Clipsverbindung (15, 16; 7, 8) und die Rille/Rippenverbindung (17, 18; 5, 6) in Fügerichtung so angeordnet sind, daß die Clipsverbindung erst nach dem vollständigen Einschieben der Rippe (5, 6) in die Rille (17, 18) einrastet.

5. Rahmen nach einem der vorhergehenden Ansprüche, dadurch gekennzeichnet, daß das Endstück (9) nach oben eine Abdeckung (23) aufweist.

6. Rahmen nach einem der vorhergehenden Ansprüche, dadurch gekennzeichnet, daß das Endstück (9) schräge, zum Anschlußstück (26) hin zusammenlaufende Seitenwände (22, 25) aufweist.

7. Rahmen nach einem der vorhergehenden Ansprüche, dadurch gekennzeichnet, daß das Endstück (9) mit einem steifen Abschlußteil (21) nach hinten über das Anschlußstück (26) hinausragt.

8. Rahmen nach einem der vorhergehenden Ansprüche, dadurch gekennzeichnet, daß das Endstück (9) einen seitlich nach außen über das Anschlußstück hinausragenden Teil (11) aufweist.

9. Rahmen nach einem der vorhergehenden Ansprüche, dadurch gekennzeichnet, daß sich zwischen Hinterkante des Rahmenteils (1) und einer dieser zugewandten Anlauffläche (20) am Endstück (9) eine Dichtung (28) befindet.

10. Rahmen nach Anspruch 9, dadurch gekennzeichnet, daß die Dichtung (28) fest am Endstück (9) angeordnet ist.

11. Rahmen nach Anspruch 10, dadurch gekennzeichnet, daß die Dichtung (28) im 2-Komponenten-Spritzverfahren bei der Herstellung des Endstücks (9) als Kunststoffspritzteil direkt an dieses angeformt wird.

## Claims

1. A frame of an openable vehicle roof with, extending laterally of a roof opening, two frame parts (1) comprising channels (4) for diverting penetrating water and each of which is bounded by an end piece (9) disposed at the rear end of the frame part (1) and on which there is a connecting piece (26) for attachment of a water drain tube, characterised in that the end piece (9) is fixed to the frame part (1) by means of a separable clip connection (15,16;7,8) and a rib connection (17,18; 5,6) comprising at least one rib (5,6) which can be pushed into a slot-like groove (17,18).

2. A frame according to Claim 1, characterised in that the groove (17,18) comprises a run-on ramp (19) over which the rib (5,6) can be inserted into the groove (17,18).

3. A frame according to Claim 1 or 2, characterised in that the clip connection consists of a resiliently disposed tongue (13,14) provided with a catch hook (15,16) and a recess (7,8) formed on the mating piece (1) and shaped to match the catch hook (15,16).

4. A frame according to Claim 3, characterised in that the clip connection (15,16; 7,8) and the groove/rib connection (17,18; 5,6) are so disposed in the jointing direction that only after the rib (5,6) has been pushed completely into the groove (17,18) does the clip connection snap into place.

5. A frame according to one of the preceding Claims, characterised in that the end piece (9) has a covering (23) at the top.

6. A frame according to one of the preceding Claims, characterised in that the end piece (9) comprises sloping side walls (22,25) which converge towards the connecting piece (26).

7. A frame according to one of the preceding Claims, characterised in that the end piece (9) has a rigid closure part (21) which projects rearwardly beyond the connection piece (26).

8. A frame according to one of the preceding Claims, characterised in that the end piece (9) comprises a part (11) which projects laterally outwardly beyond the connection piece.

9. A frame according to one of the preceding Claims, characterised in that a seal (28) is provided between the rear edge of the frame part (1) and a run-on surface (20) facing the said rear edge and provided on the end piece (9).

10. A frame according to Claim 9, characterised in that the seal (28) is rigidly fixed on the end piece (9).

11. A frame according to Claim 10, characterised in that when the end piece (9) is produced as a synthetic plastics injection moulded part, the seal (28) is formed integrally and directly on the end piece (9) by a two-component injection moulding process,.

## Revendications

1. Cadre pour toit ouvrant de véhicule, comportant deux parties (1) encadrant latéralement l'ouverture du toit et présentant des canaux (4) d'évacuation de l'eau provenant de l'extérieur, ces canaux étant délimités, à l'extrémité arrière de chacune des parties (1), par une pièce terminale (9) équipée d'une pièce de raccordement (26) sur laquelle peut être fixé un tuyau d'évacuation d'eau,
caractérisé en ce que
la pièce terminale (9) est fixée à la partie de cadre (1) par une liaison amovible à clips (15, 16 ; 7, 8) et une liaison à nervures (17, 18 ; 5, 6) comportant au moins une nervure (5, 6) qui peut coulisser dans une rainure (17, 18).

2. Cadre selon la revendication 1,
caractérisé en ce que
la rainure (17, 18) présente une rampe d'entrée (19) permettant d'introduire la nervure (5, 6) dans la rainure (17, 18).

3. Cadre selon la revendication 1 ou 2,
caractérisé en ce que
la liaison à clips est constituée d'une languette élastique (13, 14) portant un crochet d'arrêt (15, 16) auquel est associé, sur la contrepartie (1) un évidement (7, 8) de forme complémentaire à celle du crochet.

4. Cadre selon la revendication 3,
caractérisé en ce que
la liaison à clips (15, 16 ; 7, 8) et la liaison à rainure et nervure (17, 18 ; 5, 6) sont réalisées, dans la direction de raccordement, de manière que le blocage par le clips n'ait lieu qu'après coulissement complet de la nervure (5, 6) dans la rainure (17, 18).

5. Cadre selon une des revendications précédentes,
caractérisé en ce que
la pièce terminale (9) présente en haut un couvercle (23).

6. Cadre selon une des revendications précédentes,
caractérisé en ce que
la pièce terminale (9) présente des parois latérales (22, 25).

7. Cadre selon une des revendications précédentes,
caractérisé en ce que
la pièce terminale (9) dépasse vers l'arrière la pièce de raccordement (26), par une partie de fermeture rigide (21).

8. Cadre selon une des revendications précédentes,
caractérisé en ce que
la pièce terminale (9) comporte une partie (11) dépassant latéralement vers l'extérieur la pièce de raccordement (26).

9. Cadre selon une des revendications précédentes,
caractérisé en ce qu'
il existe un joint (28) à la pièce terminale (9) entre le bord arrière de la partie de cadre (1) et la face d'entrée (20), tournée vers lui.

10. Cadre selon la revendication 9,
caractérisé en ce que
le joint (28) est monté fixe sur la pièce terminale (9).

11. Cadre selon la revendication 10,
caractérisé en ce que
le joint (28) est réalisé directement, par moulage par injection à deux composants, lors de la fabrication de la pièce terminale (9).
